Europäisches Patentamt

European Patent Office

Office européen des brevets

(11) Veröffentlichungsnummer: **0 278 365 B1**

# EUROPÄISCHE PATENTSCHRIFT

(45) Veröffentlichungstag der Patentschrift: **15.05.91**

(51) Int. Cl.⁵: **F16D 55/14**

(21) Anmeldenummer: **88101470.8**

(22) Anmeldetag: **02.02.88**

(54) **Vollscheibenbremse, insbesondere für Traktoren.**

(30) Priorität: **12.02.87 DE 8702176 U**

(43) Veröffentlichungstag der Anmeldung:
**17.08.88 Patentblatt 88/33**

(45) Bekanntmachung des Hinweises auf die
Patenterteilung:
**15.05.91 Patentblatt 91/20**

(84) Benannte Vertragsstaaten:
**DE FR GB IT**

(56) Entgegenhaltungen:
**EP-A- 0 191 626**
**EP-A- 0 192 395**
**DE-A- 1 952 615**
**DE-B- 2 104 072**

(73) Patentinhaber: **LUCAS INDUSTRIES public limited company**
**Great King Street**
**Birmingham, B19 2XF West Midlands(GB)**

(72) Erfinder: **Hillen, Klaus**
**Dierdorfer Strasse 562**
**W-5450 Neuwied(DE)**
Erfinder: **Beuerle, Christoph**
**Südallee 71**
**W-5400 Koblenz(DE)**

(74) Vertreter: **Goetz, Rupert, Dipl.-Ing. et al**
**Wuesthoff & Wuesthoff Patent- und Rechtsanwälte Schweigerstrasse 2**
**W-8000 München 90(DE)**

## Beschreibung

Die Erfindung betrifft eine Vollscheibenbremse, insbesondere für Traktoren, mit

- einem Gehäuse, das innere Führungsflächen aufweist,
- mindestens einem ersten und einem zweiten gehäusefesten Anschlag,
- einer ersten und einer zweiten Druckplatte, die an den Führungsflächen des Gehäuses drehbar und axial verschiebbar geführt sind,
- einer ersten Nase an der ersten Druckplatte, die deren Drehung in einer Drehrichtung begrenzt, indem sie gegen den ersten Anschlag stößt,
- einer zweiten Nase an der zweiten Druckplatte, die deren Drehung in der entgegengesetzten Drehrichtung begrenzt, indem sie gegen den zweiten Anschlag stößt,
- einem ersten und einem zweiten Satz Bremsscheiben, die neben der ersten bzw. zweiten Druckplatte angeordnet sind,
- einer ersten und einer zweiten Zwischenscheibe, die zwischen den Bremsscheiben des ersten bzw. zweiten Satzes angeordnet und ebenfalls an den Führungsflächen des Gehäuses drehbar und axial verschiebbar geführt sind,
- mindestens einer Betätigungsvorrichtung zum gegensinnigen Verdrehen der beiden Druckplatten,
- Spreizkörpern, die zwischen den beiden Druckplatten angeordnet sind und diese auseinanderspreizen, wenn die Druckplatten gegeneinander verdreht werden, wodurch eine Bremsung mit Servowirkung eingeleitet wird, und
- Vorsprüngen an den Zwischenscheiben, die mit Vorsprüngen der Druckplatten zusammenwirkung um deren Servowirkung zu verstärken.

Bei einer bekannten Vollscheibenbremse dieser Gattung (DE-C-2104072) sind die beiden gehäusefesten Anschläge von zwei Seiten eines zylindrischen Bolzens gebildet. Jede Zwischenscheibe hat einen Vorsprung, der mit einem Vorsprung der zugehörigen Druckplatte zusammenwirkt. Wenn eine Bremsung bei einer bestimmten Drehrichtung stattfindet, üben die Bremsscheiben eines Satzes entsprechende Drehmomente auf die Druckplatten und Zwischenscheiben aus. Von einer der beiden Zwischenscheiben wird ein Drehmoment auf die zugehörige Druckplatte übertragen. Eine der beiden Druckplatten ist nach einer anfänglichen Drehung um einen kleinen Winkel durch den ihr zugeordneten gehäusefesten Anschlag daran gehindert, sich weiter zu drehen. Das Drehmoment, das bei der gegebenen Drehrichtung auf die andere Druckplatte von der ihr zugeordneten Zwischenscheibe übertragen wird, unterstützt die Servowirkung der Bremse in erwünschter Weise. Ein Teil dieses erwünschten Drehmoments geht jedoch auf dem Weg von der betreffenden Zwischenscheibe zur zugehörigen Druckplatte verloren, da diese Zwischenscheibe dazu neigt, um ihren Vorsprung zu kippen, mit dem sie sich am entsprechenden Vorsprung der zugehörigen Druckplatte abstützt. Ein solches Kippen wird zwar von den inneren Führungsflächen des Gehäuses verhindert, doch treten dabei Reibungswiderstände auf, die das nutzbare Drehmoment vermindern, das von der genannten Zwischenplatte auf die zugehörige Druckplatte übertragen wird. Außerdem erschwert die an den inneren Führungsflächen des Gehäuses auftretende Reibung eine axiale Verschiebung der betreffenden Zwischenscheibe, worunter die erwünschte Verstärkung der Bremskräfte ebenfalls leidet.

Der Erfindung liegt die Aufgabe zugrunde, eine Vollscheibenbremse, die mit Zwischenscheiben zur Verstärkung der Servowirkung ausgestattet ist, derart weiterzubilden, daß bei gegebener Drehrichtung der Bremsscheiben das von diesen auf eine der Zwischenscheiben ausgeübte Drehmoment im wesentlichen unvermindert der zugehörigen Druckplatte zur Verstärkung von deren Servowirkung zugute kommt.

Die Aufgabe ist erfindungsgemäß, ausgehend von einer Vollscheibenbremse der eingangs beschriebenen Gattung, dadurch gelöst, daß jede der beiden Zwischenscheiben mindestens zwei Vorsprünge aufweist, die in mindestens annähernd gleichen Winkelabständen gegeneinander versetzt angeordnet und je einem Vorsprung der zugehörigen Druckplatte derart zugeordnet sind, daß von jeder Zwischenscheibe auf die zugehörige Druckplatte ausschließlich Momente in derjenigen Drehrichtung übertragbar sind, in der sich die Nase der betreffenden Druckplatte vom zugehörigen gehäusefesten Anschlag wegbewegt.

Mit der Anordnung von zwei oder mehr Vorsprüngen an jeder Zwischenscheibe wird erreicht, daß bei jeder der beiden möglichen Drehrichtungen diejenige Zwischenscheibe, welche die Servowirkung der ihr zugeordneten Druckplatte verstärken soll, sich derart an dieser Druckplatte abstützt, daß die inneren Führungsflächen des Gehäuses auf diese Zwischenscheibe, wenn überhaupt, nur sehr geringe Führungskräfte zu übertragen haben. Das Drehmoment, das diese Zwischenscheibe von den benachbarten Bremsscheiben erhält, wird also nahezu vollständig an die zugehörige Druckplatte weitergegeben. Die andere Zwischenscheibe überträgt hingegen das bei der gegebenen Drehrichtung auf sie einwirkende, nutzlose Drehmoment unmittelbar auf das Gehäuse und nicht auf die ihr zugeordnete Druckplatte, so daß diese von dem ihr zugeordneten gehäusefesten Anschlag nur gegen das Drehmoment abgestützt werden muß, das auf diese Druckplatte selbst einwirkt. Infolgedessen wird die erforderliche axiale Verschiebung dieser Druckplatte durch den zugehörigen gehäusefesten Anschlag nicht unnötig erschwert. Insgesamt werden also erhebliche Reibungsverluste vermieden, was der Servowirkung zugute kommt und die zusätzliche vorteilhafte Wirkung hat, daß der Verschleiß an den miteinander zusammenwirkenden Anschlagflächen gering gehalten wird.

Es genügt im allgemeinen, wenn jede der beiden Zwischenscheiben zwei Vorsprünge aufweist, die mit je einem Vorsprung der zugehörigen Druckplatte zusammenwirken und einander diametral gegenüberliegen.

Es ist vorteilhaft, wenn jede der beiden Zwischenscheiben mindestens einen zusätzlichen Vorsprung aufweist, dem ein gehäusefester Anschlag zugeordnet ist, um eine Drehung der betreffenden Zwischenscheibe von den ihr zugeordneten Vorsprüngen der zugehörigen Druckplatte weg zu begrenzen.

Wenn die erfindungsgemäße Bremse, wie die oben beschriebene bekannte Vollscheibenbremse, eine mechanische Betätigungsvorrichtung hat, dann kann diese Betätigungsvorrichtung eine radial in das Gehäuse hineinragende Büchse aufweisen, an der zwei gehäusefeste Anschläge für je eine Nase der beiden Druckplatten ausgebildet sind, und in der eine Betätigungswelle drehbar gelagert ist, die mit diesen beiden Nasen über je einen Betätigungsstößel verbunden ist. Bei einer solchen Betätigungsvorrichtung muß je nach Drehrichtung der Bremsscheiben der eine oder andere Betätigungsstößel eine Reaktionskraft derjenigen Druckplatte aufnehmen, die bei der gegebenen Drehrichtung ohne Servowirkung arbeitet. Durch die erfindungsgemäßen Maßnahmen wird jedoch erreicht, daß diese Reaktionskraft nur dem Drehmoment entspricht, das auf die betreffende, ohne Servowirkung arbeitende Druckplatte selbst einwirkt und nicht durch die auf die zugehörige Zwischenplatte einwirkenden Momente erhöht wird.

Die Erfindung kann ferner dadurch weitergebildet sein, daß der mechanischen Betätigungsvorrichtung diametral gegenüber eine hydraulische Betätigungsvorrichtung angeordnet ist, die einen gehäusefesten Zylinder und zwei darin gegenläufig betätigbare Kolben aufweist, die auf je eine weitere Nase der ersten bzw. zweiten Druckplatte einwirken.

Diese Ausführungsform läßt sich schließlich dadurch weiterbilden, daß an den beiden Nasen jeder der beiden Druckplatten je ein axialer Vorsprung für das Zusammenwirken mit einem radialen Vorsprung der zugehörigen Zwischenscheiben angeordnet ist.

Ein Ausführungsbeispiel wird im folgenden mit weiteren Einzelheiten der Erfindung anhand schematischer Zeichnungen erläutert. Es zeigt:

Fig. 1    eine teilweise als Schnitt in einer radialen Ebene gezeichnete Ansicht einer erfindungsgemäßen Vollscheibenbremse,

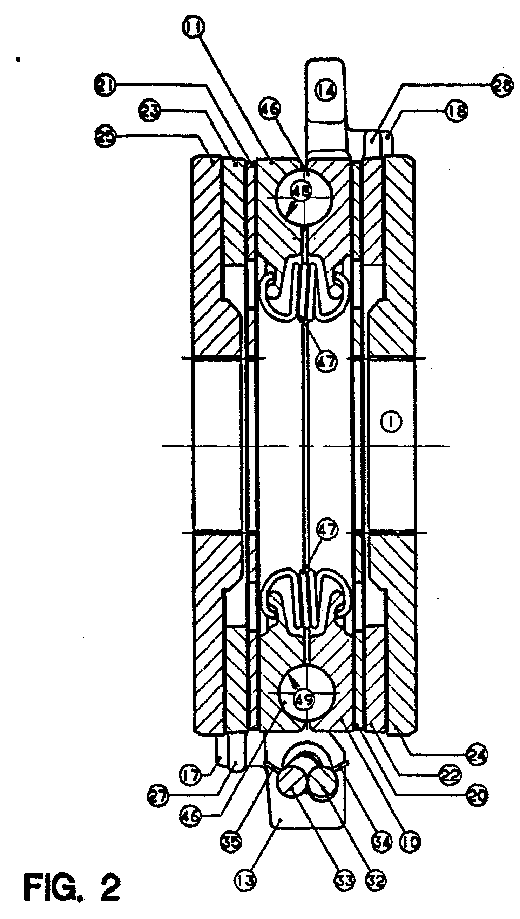

Fig. 2    den axialen Teilschnitt II-II in Fig. 1,

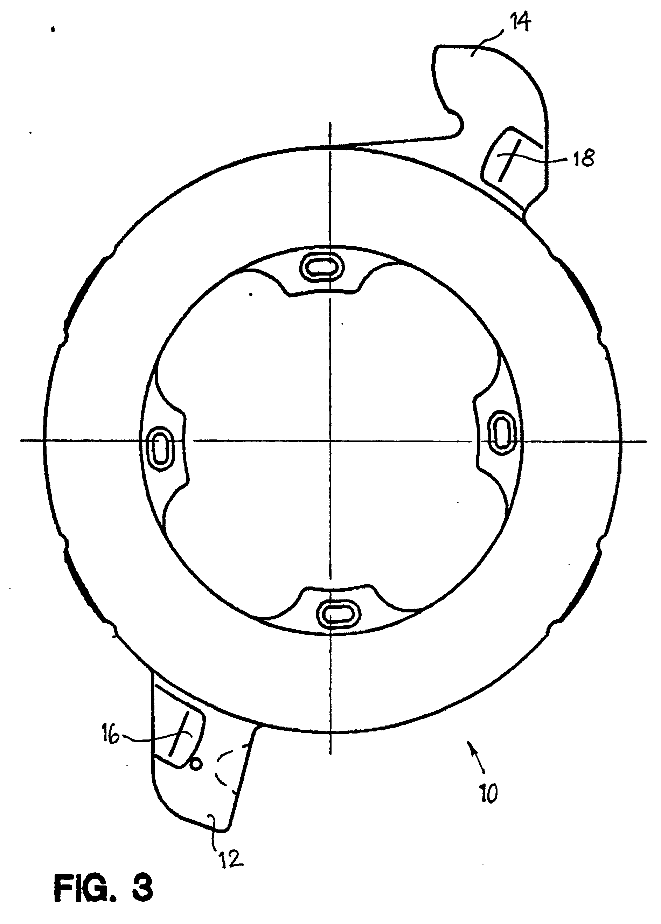

Fig. 3    eine Ansicht einer Druckplatte und

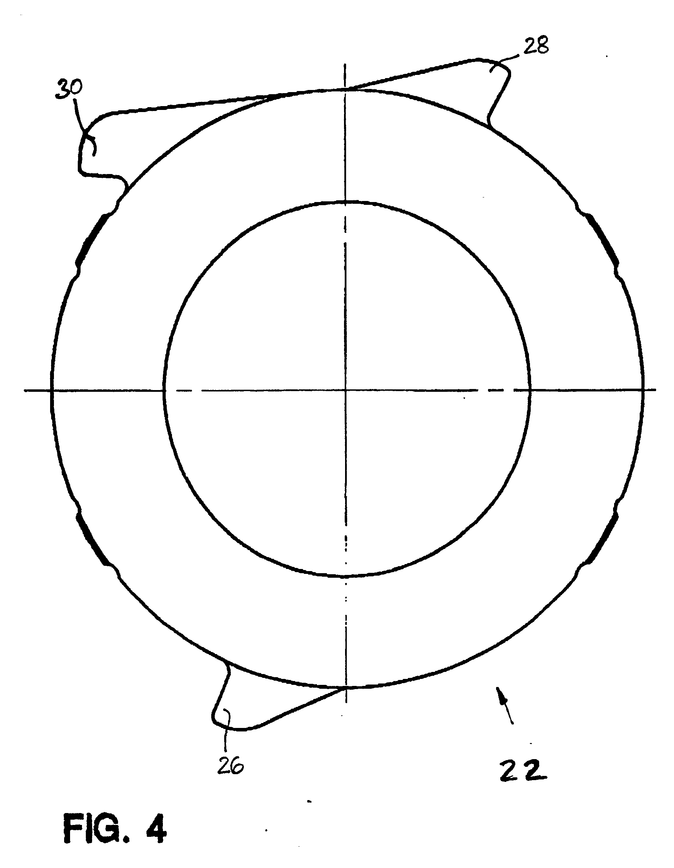

Fig. 4    eine Ansicht einer Zwischenscheibe.

Die dargestellte Bremse ist einer Welle 1 zugeordnet, von der nur die geometrische Achse dargestellt ist. Beispielsweise kann die Welle 1 eine Hinterachs-Halbwelle eines Traktors sein, der an beiden Halbwellen je eine Vollscheibenbremse aufweist.

Die dargestellte Bremse hat ein Gehäuse 2 mit drei kreisbogenförmigen inneren Führungsflächen 3, 4 und 5, von denen die Führungsfläche 5 erheblich länger ist als die Führungsflächen 3 und 4 und diesen diametral gegenüberliegt. An dem von der Führungsfläche 3 abgewandten Ende der Führungsfläche 4 weist das Gehäuse 2 einen Anschlag 6 auf, ein entsprechender Anschlag 7 ist symmetrisch dazu an einem Ende der Führungsfläche 5 ausgebildet. Als besondere Baugruppen sind in das Gehäuse 2 einander diametral gegenüber eine mechanische Betätigungsvorrichtung 8 und eine hydraulische Betätigungsvorrichtung 9 eingebaut.

An den Führungsflächen 3, 4 und 5 sind eine erste Druckplatte 10 und eine zweite Druckplatte 11 derart geführt, daß sie in bezug auf die geometrische Achse der Welle 1 zentriert sind, sich um diese Achse drehen und axial verschieben können. Die Druckplatten 10 und 11 haben eine erste bzw. zweite radial vorspringende Nase 12 bzw. 13, die auf je einer Seite der mechanischen Betätigungsvorrichtung 8 angeordnet sind, sowie je eine weitere radial vorspringende Nase 14 bzw. 15, die auf je einer Seite der hydraulischen Betätigungsvorrichtung 9 angeordnet sind. An jeder der Nasen 12 bis 15 ist ein axialer Vorsprung 16 bzw. 17 bzw. 18 bzw. 19 ausgebildet; jeder dieser Vorsprünge erstreckt sich axial nach außen, so daß die Vorsprünge jeder Druckplatte von den Vorsprüngen der anderen Druckplatte weggerichtet sind.

Im dargestellten Beispiel sind die axialen Vorsprünge 16 bis 19 zusammen mit der zugehörigen Nase 12 bzw. 13 bzw. 14 bzw. 15 und der zugehörigen Druckplatte 10 bzw. 11 in einem Stück aus Gußstahl hergestellt; die axialen Vorsprünge 16 bis 19 können aber beispielsweise auch von je einem achsparallelen Bolzen gebildet sein, der in die zugehörige Nase eingeschraubt ist. Die beiden Druckplatten 10 und 11 sind einander gleich aber seitenverkehrt in das Gehäuse 2 eingebaut.

Hier und im folgenden haben Bestandteile der ersten Druckplatte 10 sowie Bauteile, die ihr besonders zugeordnet sind, geradzahlige Bezugszeichen, während Bestandteile der zweiten Druckplatte 11 und Bauteile, die dieser besonders zugeordnet sind, ungeradzahlige Bezugszeichen haben.

Unmittelbar neben der ersten Druckplatte 10, auf deren von der zweiten Druckplatte 11 abgewandten Seite, ist eine erste axial innere Bremsscheibe 20 angeordnet; in entsprechender Weise ist unmittelbar neben der zweiten Druckplatte 11 eine zweite axial innere Bremsscheibe 21 angeordnet. Weiter axial außen schließt sich an die Bremsscheibe 20 eine erste Zwischenscheibe 22 an, während sich an die Bremsscheibe 21 eine zweite Zwischenscheibe 23 anschließt. Darauf folgt auf der einen Seite eine erste axial äußere Bremsscheibe 24 und auf der anderen Seite eine zweite axial äußere Bremsscheibe 25. Jede der beiden Zwischenscheiben 22 und 23 ist also zwischen zwei Bremsscheiben 20 und 24 bzw. 21 und 25 angeordnet.

Die beiden Zwischenscheiben 22 und 23 sind einander gleich aber seitenverkehrt in das Gehäuse 2 eingebaut. Die axial inneren Bremsscheiben 20 und 21 sind einander völlig gleich; ebenso sind die axial äußeren Bremsscheiben 24 und 25 einander gleich.

Die Zwischenscheiben 22 und 23 sind an den Führungsflächen 3, 4 und 5 des Gehäuses 2 drehbar und axial verschiebbar geführt. Die axial inneren Bremsscheiben 20 und 2l sind mit der Welle 1 zu gemeinsamer Drehung, jedoch axial verschiebbar verbunden, beispielsweise durch Vielnutprofile. Die axial äußeren Bremsscheiben 24 und 25 sind mit der Welle 1 ebenfalls zu gemeinsamer Drehung verbunden, beispielsweise durch Vielnutprofile, sind jedoch durch Befestigungselemente üblicher Art daran gehindert, sich gegenüber der Welle 1 axial zu verschieben.

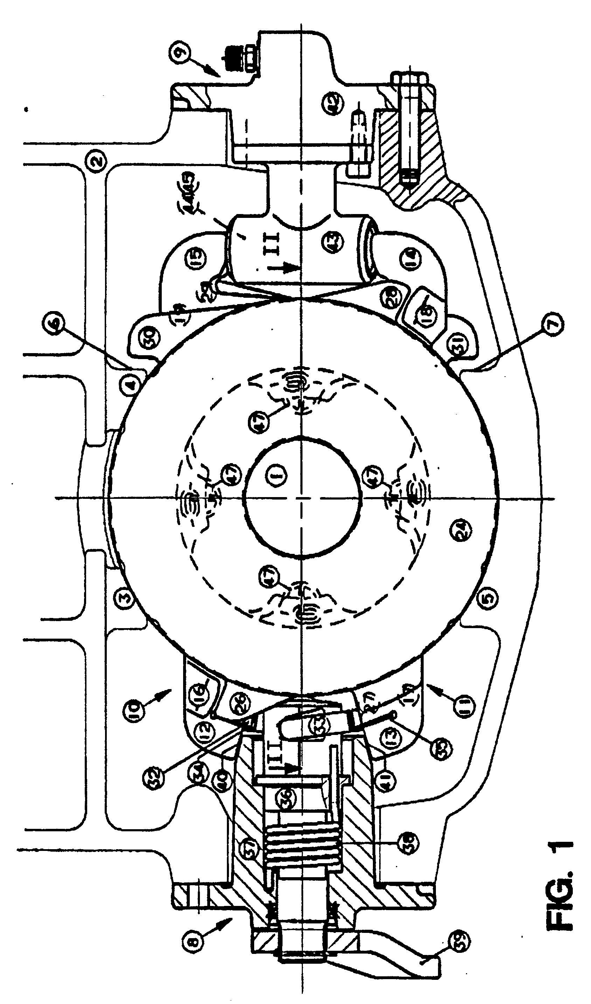

Die Zwischenscheibe 22 hat zwei einander diametral gegenüberstehende radiale Vorsprünge 26 und 28, die nach Überwindung eines kleinen Spiels in einer und nur einer Richtung, die in Fig. 1 dem Uhrzeigersinn entspricht, imstande sind, Tangentialkräfte auf den axialen Vorsprung 16 bzw. 18 der ersten Druckplatte 10 zu übertragen. In entsprechender Weise sind an der zweiten Zwischenscheibe 23 einander diametral gegenüberstehende radiale Vorsprünge 27 und 29 ausgebildet, die nach Überwindung eines kleinen Spiels ein Drehmoment in entgegengesetzter Drehrichtung, gemäß Fig. 1 also entgegen dem Uhrzeigersinn, imstande sind, Tangentialkräfte auf die axialen Vorsprünge 17 und 19 der zweiten Druckplatte 11 zu übertragen.

Die Möglichkeit der ersten Zwischenscheibe 22, sich mit ihren radialen Vorsprüngen 26 und 28 von den zugehörigen axialen Vorsprüngen 16 und 18 der ersten Druckplatte weg zu drehen, ist durch einen zusätzlichen radialen Vorsprung 30 begrenzt, der nach einer kleinen Drehung gegen den gehäusefesten Anschlag 6 stößt. In entsprechender Weise ist die Möglichkeit der zweiten Zwischenscheibe 23, sich mit ihren radialen Vorsprüngen 27 und 2g von den zugehörigen axialen Vorsprüngen 17 und 19 der zweiten Druckplatte 11 wegzudrehen, durch einen zusätzlichen radialen Vorsprung 31 begrenzt, der dem gehäusefesten Anschlag 7 zugeordnet ist.

Zur mechanischen Betätigungsvorrichtung 8 gehören zwei Stößel 32 und 33, die durch je eine Haltefeder 34 bzw. 35 mit der Nase 12 der ersten Druckplatte 10 bzw. der Nase 13 der zweiten Druckplatte 11 verbunden sind und mit je einem Ende in eine Mulde an der zugehörigen Nase eingreifen. Jeder der beiden Stößel 32 und 33 greift mit seinem anderen Ende in eine Mulde einer Betätigungswelle 36 ein, die sich radial zur abzubremsenden Welle 1 erstreckt und in einer entsprechend radial angeordneten, am Gehäuse 2 befestigten Büchse 37 drehbar gelagert ist.

Die Betätigungswelle 36 ist mit der Büchse 37 durch eine Rückstellfeder 38 verbunden, die bestrebt ist, die Betätigungswelle und, durch die Vermittlung der Stößel 32, 33 und Haltefedern 34, 35, auch die Druckplatten 10 und 11 in ihrer aus Fig. 1 ersichtlichen Ruhestellung zu halten. An einem aus der Büchse 37 herausragenden Ende der Betätigungswelle 36 ist ein Betätigungshebel 39 befestigt, der durch ein nicht dargestelltes Gestänge o.dgl. mit einem Handbremshebel verbindbar ist. Ein in das Gehäuse 2 hineinragender Teil der Büchse 37 bildet zwei voneinander abgewandte gehäusefeste Anschläge 40 und 41 für die Nase 12 der ersten Druckplatte 10 bzw. die Nase 13 der zweiten Druckplatte 11.

Zur hydraulischen Betätigungsvorrichtung 9, die der mechanischen Betätigungsvorrichtung 8 diametral gegenüber angeordnet ist, gehört ein am Gehäuse 2 befestigter Anschlußkörper 42, an dem ein doppelt wirkender Zylinder 43 befestigt ist. Der Zylinder 43 erstreckt sich in einer zu den Druckplatten 10 und 11 tangentialen Richtung und enthält zwei voneinander abgewandte Kolben 44 und 45, an denen die Nase 14 der ersten Druckplatte 10 bzw. die Nase 15 der zweiten Druckplatte 11 anliegt.

Die beiden Druckplatten 10 und 11 sowie zwischen ihnen liegende Spreizkörper 46 sind durch Zugfedern 47 in axialer Richtung zusammengespannt. Die Spreizkörper 46 sind im dargestellten Beispiel Kugeln, die in einander paarweise gegenüberliegenden, rampenförmigen Ausnehmungen 48 und 49 der Druckplatten 10 und 11 aufgenommen sind.

Bei einer normalen Betriebsbremsung werden die beiden Kolben 44 und 45 durch in den Zylinder 43 eingeleitete Bremsflüssigkeit auseinanderbewegt, so daß sie die Nasen 14 und 15 voneinander weg drücken und somit die beiden Druckplatten 10 und 11 gegeneinander verdrehen. Infolgedessen werden die Druckplatten 10 und 11 durch die Spreizkörper 46 in axialer Richtung auseinandergespreizt, so daß jede der Druckplatten die ihr benachbarten Scheiben, namlich die Bremsscheibe 20, die Zwischenscheibe 22 und die Bremsscheibe 24 auf der einen Seite bzw. die Bremsscheibe 21, die Zwischenscheibe 23 und die Bremsscheibe 25 auf der anderen Seite, gegeneinander drückt.

Wenn die Welle 1 sich beispielsweise, in Fig. 1 betrachtet, im Uhrzeigersinn dreht, werden zunächst beide Druckplatten 10 und 11 sowie beide Zwischenscheiben 22 und 23 von den benachbarten Bremsscheiben im Uhrzeigersinn mitgenommen, bis nach Überwindung eines kleinen Spiels die Nase 13 der Druckplatte 11 gegen den zugehörigen Anschlag 41 stößt, und nach Überwindung eines etwas größeren Spiels, somit etwas später, der zusätzliche radiale Vorsprung 31 der Zwischenscheibe 23 gegen den Anschlag 7 stößt. Die Druckplatte 11 und die Zwischenscheibe 23 sind nun nur noch axial verschiebbar, während die Druckplatte 10 von der ihr benachbarten Bremsscheibe 20 im Uhrzeigersinn weiter mitgenommen wird und infolgedessen durch die Spreizkörper 46 in axialer Richtung weiter von der Druckplatte 11 weggedrückt wird. Das auf die Druckplatte 10 einwirkende Bremsmoment wird also, in einem durch die Rampenwinkel der Ausnehmungen 48 und 49 bestimmten Verhältnis, in eine zusätzliche axiale Kraft umgesetzt; an der Druckplatte 10 entsteht also ein Servoeffekt.

Der Servoeffekt wird dadurch verstärkt, daß die beiden radialen Vorsprünge 26 und 28 der sich noch etwas weiterdrehenden Zwischenscheibe 22 sich an den zugehörigen axialen Vorsprung 16 bzw. 18 der Druckplatte 10 anlegen und auf diese Vorsprünge praktisch das gesamte Drehmoment übertragen, das die beiden benachbarten Bremsscheiben 24 und 26 auf die Zwischenscheibe 22 ausüben. Diese Drehmomentübertragung wird durch Reibung der Zwischenscheibe 22 an den Führungsflächen 3, 4 und 5 des Gehäuses entweder nicht oder nur in vernachlässigbar geringem Maß behindert, da die Zwischenscheibe 22 wegen ihrer symmetrischen Abstützung über ihre einander diametral gegenüberliegenden radialen Vorsprünge 26 und 28 einer zusätzlichen Abstützung durch eine der Führungsflächen 3, 4 oder 5 nicht oder nur in geringem Maß bedarf.

Entsprechendes geschieht bei entgegengesetzter Drehrichtung der abzubremsenden Welle 1, wobei die Druckplatten 10 und 11 ihre Rollen vertauschen und Gleiches auch für die Zwischenscheiben gilt.

Wenn anstelle der hydraulischen Betätigungsvorrichtung 9 die mechanische Betätigungsvorrichtung 8 benutzt werden soll, wird mittels des Betätigungshebels 39 die Betätigungswelle 36 derart gedreht, daß die beiden Betätigungsstößel 32 und 33 die Nasen 12 und 13 voneinander weg drücken. Dadurch werden die Druckplatten 10 und 11 wiederum gegeneinander verdreht und infolgedessen axial auseinandergespreizt. Wenn nun angenommen wird, die abzubremsende Welle 1 drehe sich, in Fig. 1 betrachtet, im Uhrzeigersinn, so daß die Druckplatten 10 und 11 sowie die Zwischenscheiben 22 und 23 im Uhrzeigersinn mitgenommen werden, dann belastet die Nase 13 den zugehörigen Betätigungsstößel 33 mit einer Kraft, die nur von dem auf die Druckplatte 11 einwirkenden Drehmoment abhängig ist, aber nicht durch das auf die zugehörige Zwischenscheibe 23 einwirkende Drehmoment erhöht wird. Die Zwischenscheibe 23 stützt sich nämlich wiederum mit ihrem zusätzlichen Vorsprung 31 am gehäusefesten Anschlag 7 ab.

Die Belastung des Betätigungsstößels 33 ist also bei Drehung der Welle 1 im Uhrzeigersinn nur so groß, wie sie wäre, wenn die Zwischenscheibe 23 nicht vorhanden wäre. Der andere Betätigungsstößel 32 wird durch die an der Druckplatte 10 auftretende und von der Zwischenscheibe 22 verstärkte Servowirkung entlastet. Das Drehmoment, das zur mechanischen Betätigung mittels des Betätigungshebels 39 aufgebracht werden muß, ist also geringer als wenn die Zwischenscheibe 22 nicht vorhanden wäre. Entsprechendes gilt bei entgegengesetzter Drehung der Welle 1 nur mit dem Unterschied, daß die Betätigungsstößel 32 und 33 ihre Rollen tauschen.

## Ansprüche

1. Vollscheibenbremse, insbesondere für Traktoren, mit
   - einem Gehäuse (2), das innere Führungsflächen (3, 4, 5) aufweist,
   - mindestens einem ersten und einem zweiten gehäusefesten Anschlag (40, 41),
   - einer ersten und einer zweiten Druckplatte (10, 11), die an den Führungsflächen (3, 4, 5) des Gehäuses (2) drehbar und axial verschiebbar geführt sind,
   - einer ersten Nase (12) an der ersten Druckplatte (10), die deren Drehung in einer Drehrichtung begrenzt, indem sie gegen den ersten Anschlag (40) stößt,
   - einer zweiten Nase (13) an der zweiten Druckplatte (11), die deren Drehung in der entgegengesetzten Drehrichtung begrenzt, indem sie gegen den zweiten Anschlag (41) stößt,
- einem ersten und einem zweiten Satz Bremsscheiben (20, 24; 21, 25), die neben der ersten bzw. zweiten Druckplatte (10, 11) angeordnet sind,
- einer ersten und einer zweiten Zwischenscheibe (22, 23), die zwischen den Bremsscheiben (20, 24; 21, 25) des ersten bzw. zweiten Satzes angeordnet und ebenfalls an den Führungsflächen (3, 4, 5) des Gehäuses (2) drehbar und axial verschiebbar geführt sind,
- mindestens einer Betätigungsvorrichtung (8) zum gegensinnigen Verdrehen der beiden Druckplatten (10; 11),
- Spreizkörpern (46), die zwischen den beiden Druckplatten (10; 11) angeordnet sind und diese auseinanderspreizen, wenn die Druckplatten gegeneinander verdreht werden, wodurch eine Bremsung mit Servowirkung eingeleitet wird, und
- Vorsprüngen (26, 28; 27, 29) an den Zwischenscheiben (22, 23), die mit Vorsprüngen (16, 18; 17, 19) der Druckplatten (10; 11) zusammenwirken, um deren Servowirkung zu verstärken,
dadurch **gekennzeichnet,** daß jede der beiden Zwischenscheiben (22, 23) mindestens zwei Vorsprünge (26, 28; 27, 29) aufweist, die in mindestens annähernd gleichen Winkelabständen gegeneinander versetzt angeordnet und je einem Vorsprung (16, 18; 17 19) der zugehörigen Druckplatte (10; 11) derart zugeordnet sind, daß von jeder Zwischenscheibe (22, 23) auf die zugehörige Druckplatte (10; 11) ausschließlich Momente in derjenigen Drehrichtung übertragbar sind, in der sich die Nase (12; 13) der betreffenden Druckplatte (10; 11) vom zugehörigen gehäusefesten Anschlag (40; 41) wegbewegt.

2. Vollscheibenbremse nach Anspruch 1,
dadurch **gekennzeichnet,** daß jede der beiden Zwischenscheiben (22, 23) zwei Vorsprünge (26, 28; 27, 29) aufweist, die mit je einem Vorsprung (16, 18; 17, 19) der zugehörigen Druckplatte (10; 11) zusammenwirken und einander diametral gegenüberliegen.

3. Vollscheibenbremse nach Anspruch 1 oder 2,
dadurch **gekennzeichnet,** daß jede der beiden Zwischenscheiben (22, 23) mindestens einen zusätzlichen Vorsprung (30; 31) aufweist, dem ein gehäusefester Anschlag (6; 7) zugeordnet ist, um eine Drehung der betreffenden Zwischenscheibe (22; 23) von den ihr zugeordneten Vorsprüngen (16, 18; 17, 19) der zugehörigen Druckplatte (10; 11) weg zu begrenzen.

4. Vollscheibenbremse nach einem der Ansprüche 1 bis 3 mit einer mechanischen Betätigungsvorrichtung (8),
dadurch **gekennzeichnet,** daß die mechanische Betätigungsvorrichtung (8) eine radial in das Gehäuse (2) hineinragende Büchse (37) aufweist, an der zwei gehäusefeste Anschläge (40, 41) für je eine Nase (12; 13) der beiden Druckplatten (10, 11) ausgebildet sind, und in der Büchse (37) eine Betätigungswelle (36) drehbar gelagert ist, die mit diesen beiden Nasen (12, 13) über je einen Betätigungsstößel (32; 33) verbunden ist.

5. Vollscheibenbremse nach Anspruch 4,
dadurch **gekennzeichnet,** daß der mechanischen Betätigungsvorrichtung (8) diametral gegenüber eine hydraulische Betätigungsvorrichtung (9) angeordnet ist, die einen gehäusefesten Zylinder (43) und zwei darin gegenläufig betätigbare Kolben (44, 45) aufweist, die auf je eine weitere Nase (14; 15) der ersten bzw. zweiten Druckplatte (10; 11) einwirken.

6. Vollscheibenbremse nach den Ansprüchen 2 und 5,
dadurch **gekennzeichnet,** daß an den beiden Nasen (12, 14; 13, 15) jeder der beiden Druckplatten (10; 11) je ein axialer Vorsprung (16, 18; 17, 19) für das Zusammenwirken mit je einem radialen Vorsprung (26, 28; 27, 29) der zugehörigen Zwischenscheiben (22; 23) angeordnet ist.

**Claims**

1. Full disc-type disc brake, especially for tractors, comprising
- a housing (2) having internal guiding surfaces (3, 4, 5),
- at least one first and one second abutment (40, 41), fixed with respect to the housing,
- a first and a second pressure plate (10, 11) which are rotatably and axially slidably guided on the guiding surfaces (3, 4, 5,) of the housing (2),
- a first lug (12) on the first pressure plate (10), said lug limiting rotational movement of the latter in a direction of rotation by engaging with the first abutment (40),
- a second lug (13) on the second pressure plate (11), said lug limiting rotational movement of the latter in the opposite direction of rotation by engaging with the second abutment (41),

- a first and a second set of braking discs (20, 24; 21, 25) which are mounted besides the first and the second pressure plate (10, 11), respectively,
- a first and a second intermediate disc (22, 23) which are mounted between the braking discs (20, 24; 21, 25) of the first and the second set, respectively, and are also rotatably and axially slidably guided on the guiding surfaces (3, 4, 5) of the housing (2),
- at least an actuating device (8) for rotating the two pressure plates (10, 11) in opposite directions,
- spreading elements (46) which are arranged between the two pressure plates (10; 11) and acting to spread them apart when the pressure plates are rotated in opposite directions, whereby a braking with servo action is initiated, and
- projections (26, 28; 27, 29) on the intermediate discs (22, 23), to cooperate with projections (16, 18; 17, 19) of the pressure plates (10, 11) in order to increase their servo action,

  **characterized** in that each one of the two intermediate discs (22, 23) has at least two projections (26, 28; 27, 29) which are spaced from one another at generally equal angular intervals and are each associated to a projection (16, 18; 17, 19) of the respective pressure plate (10, 11) in such a manner that the transmission of moments from any intermediate disc to the respective pressure plate (10; 11) is capable of being effected exclusively in that direction of rotation in which the lug (12; 13) of the respective pressure plate (10; 11) is moving away from the respective abutment (40; 41) fixed with respect to the housing.

2. Full disc-type disc brake according to Claim 1, **characterized** in that each one of the two intermediate discs (22, 23) has two projections (26, 28; 27, 29) which are each cooperating with a projection (16, 18; 17, 19) of the respective pressure plate (10; 11) and are arranged at diametrically opposite locations.

3. Full disc-type disc brake according to Claim 1 or 2, **characterized** in that each one of the two intermediate discs (22, 23) has at least one additional projection (30; 31) to which an abutment (6; 7) fixed with respect to the housing is associated, in order to limit a rotational movement of the respective intermediate disc (22; 23) away from the projections (16, 18; 17, 19) which are associated to it on the respective pressure plate (10; 11).

4. Full disc-type disc brake according to anyone of Claims 1 to 3, comprising a mechanical actuating device (8), **characterized** in that the mechanical actuating device (8) includes a sleeve (37) radially projecting into the housing (2), said sleeve being formed with two abutments (40, 41) fixed with respect to the housing, one for each lug (12; 13) of the two pressure plates (10, 11), and that within the sleeve (37) an actuating shaft (36) is rotatably supported which is connected with these two lugs (12, 13) each by means of an actuating plunger (32; 33).

5. Full disc-type disc brake according to Claim 4, **characterized** in that at a location diametrically opposite to the mechanical actuating device (8), an hydraulic actuating device (9) is arranged which comprises a cylinder (43), fixed with respect to the housing, and two pistons (44, 45), capable of being driven therein in opposite directions, which pistons are each acting upon a further lug (14; 15) of the first and the second pressure plate (10; 11), respectively.

6. Full disc-type disc brake according to Claims 2 and 5, **characterized** in that on each of the two lugs (12, 14; 13, 15) of each of the two pressure plates (10; 11), an axial projection (16, 18; 17, 19) is arranged for cooperation each with a radial projection (26, 28; 27, 29) of the respective intermediate discs (22; 23).

## Revendications

1. Frein à disque complet, plus particulièrement destiné à des tracteurs, comprenant
   - un carter (2), ayant des surfaces de guidage internes (3, 4, 5),
   - au moins une première et une deuxième butée (40, 41) fixes relativement au carter,
   - un premier et un deuxième plateau de serrage (10, 11) qui sont guidés à rotation et à glissement axial sur les surfaces de guidage (3, 4, 5) du carter (2),
   - un premier taquet (12) monté sur le premier plateau de serrage (10), ledit taquet limitant un mouvement rotatif de ce dernier dans une direction de rotation, en se heurtant contre la première butée (40),
- un deuxième taquet (13) monté sur le deuxième plateau de serrage (11), ledit taquet limitant un mouvement rotatif de ce dernier dans la direction de rotation opposée, en se heurtant contre la deuxième butée (41),
- un premier et un deuxième jeu de disques de freinage (20, 24; 21, 25) qui sont disposés à côté, respectivement, du premier plateau de serrage (10) et du deuxième plateau de serrage (11),
- un premier et un deuxième disque intermédiaire (22, 23) qui sont disposés entre les disques de freinage (20, 24; 21, 25), respectivement, du premier et du deuxième jeu et sont guidés, eux aussi, à rotation et à glissement axial sur les surfaces de guidage (3, 4, 5) du carter (2),
- un dispositif de commande (8), au moins, destiné à tourner les deux plateaux de serrage (10, 11) en sens opposés,
- des éléments d'écartement (46) qui sont disposés entre les deux plateaux de serrage (10,; 11) et servent à les écarter l'un de l'autre quand les plateaux de serrage sont tournés en sens opposés, moyen par lequel un freinage assisté est déclenché, et
- des talons (26, 28: 27, 29) sur les disques intermédiaires (22, 23) qui coopèrent avec des talons (16, 18; 17, 19) des plateaux de serrage (10; 11) afin d'augmenter leur effet auto-amplifiant,
**caractérisé** en ce que chacun des deux disques intermédiaires (22, 23) comprend deux talons (26, 28; 27, 29), au moins, qui sont espacés les uns des autres d'intervalles angulaires sensiblement égaux et sont associés chacun à un talon (16, 18; 17, 19) du plateau de serrage respectif (10; 11) de telle manière que la transmission de couples de chacun des disques intermédiaires (22, 23) au plateau de serrage respectif (10; 11) est réalisable exclusivement dans la direction de rotation dans laquelle le taquet (12; 13) du plateau de serrage respectif (10; 11) s'éloigne de la butée (40; 41) respective, fixe relativement au carter.

2. Frein à disque complet selon la revendication 1,
**caractérisé** en ce que chacun des deux disques intermédiaires (22, 23) est muni de deux talons (26, 28; 27, 29) qui coopèrent chacun avec un talon (16, 18; 17, 19) du plateau de serrage respectif (10; 11) et qui sont disposés en des points diamétralement opposés.

3. Frein à disque complet selon la revendication 1 ou 2,
**caractérisé** en ce que chacun des deux disques intermédiaires (22, 23) est muni d'un talon supplémentaire (30; 31), au moins, auquel est associée une butée (6; 7), fixe relativement au carter, afin de limiter un mouvement rotatif du disque intermédiaire respectif (22; 23) en éloignement des talons (16, 18; 17, 19) qui lui sont associés sur le plateau de serrage respectif (10; 11).

4. Frein à disque complet selon l'une quelconque des revendications 1 à 3, comprenant un dispositif de commande mécanique (8),
**caractérisé** en ce que le dispositif de commande mécanique (8) comprend une douille (37) pénétrant radialement dans le carter (2), douille sur laquelle sont formées deux butées (40, 41), fixes relativement au carter, pour chacune un taquet (12; 13) des deux plateaux de serrage (10, 11), et en ce qu'un arbre de commande (36) est logé à rotation dans la douille (37), ledit arbre étant relié à ces deux taquets (12, 13) au moyen d'un poussoir d'actionnement (32; 33) chacun.

5. Frein à disque complet selon la revendication 4,
**caractérisé** en ce que, à un point diamétralement opposé au dispositif de commande mécanique (8), se trouve monté un dispositif de commande hydraulique (9) qui comprend un cylindre (43) fixe relativement au carter et deux pistons (44, 45) aptes à être actionnés dans ledit cylindre en sens opposés, lesdits pistons agissant chacun sur un autre taquet (14; 15) respectivement du premier et du deuxième plateau de serrage (10; 11).

6. Frein à disque complet selon les revendications 2 et 5,
**caractérisé** en ce que sur chacun des deux taquets (12, 14; 13, 15) de chacun des deux plateaux de serrage (10; 11) un talon axial (16, 18; 17, 19) est disposé pour la coopération chacun avec un talon radial (26, 28; 27, 29) des disques intermédiaires respectifs (22; 23).

FIG. 1

FIG. 2

FIG. 3

FIG. 4